# EUROPEAN PATENT SPECIFICATION

(11) **EP 3 825 278 B1**
(45) Date of publication and mention of the grant of the patent: **17.12.2025**
(21) Application number: 20180159.4
(22) Date of filing: 16.06.2020
(51) Int. Cl.: C01B 21/06, C01B 21/086, C07F 1/02, H01M 10/0525, H01M 10/0568

(54) **METHOD FOR PREPARING HIGH-PURITY BISFLUOROSULFONYLIMIDE SALT**
VERFAHREN ZUR HERSTELLUNG VON HOCHREINEM BISFLUORSULFONYLIMIDSALZ
PROCÉDÉ DE PRÉPARATION D'UN SEL DE BISFLUOROSULFONYLIMIDE DE HAUTE PURETÉ

(30) Priority: 20.11.2019 CN 201911139935
(43) Date of publication of application: 26.05.2021
(73) Proprietor: Shanghai Rolechem Co., Ltd., Shanghai 201207 (CN)
(72) Inventor: Yang, Bin, Shanghai, 201207 (CN); Shen, Fengfeng, Shanghai, 201207 (CN)
(74) Representative: Canzler & Bergmeier Patentanwälte Partnerschaft mbB

(56) References cited:
- EP-A1- 3 466 872
- CN-A- 104 925 765
- CN-A- 106 365 132
- CN-A- 107 416 782
- CN-A- 109 734 061
- CN-B- 107 055 493
- FR-A1- 3 088 931

## Description

### FIELD OF THE INVENTION

The present application relates to the technical field of additives to an electrolytic solution; in particular, the present application relates to a method for preparing a high-purity bisfluorosulfonylimide salt that is simple, economical, and easy to be industrialized.

### BACKGROUND OF THE INVENTION

In an electrolytic solution, a lithium hexafluorophosphate is an electrolyte lithium salt commonly used in current lithium batteries. It is stable to the negative electrode, has high electrical conductivity, large discharge capacity, small internal resistance, and fast charging and discharging speeds. It has advantages such as outstanding ionic conductivity, better oxidation stability, and lower environmental pollution. The lithium hexafluorophosphate is currently the first choice of an electrolyte for lithium-ion batteries. It is used in commercial lithium-ion batteries as a main salt. The amount of added lithium hexafluorophosphate is about 15% of the total amount of the electrolytic solution, and the concentration thereof is about 1mol/L. After years of technological development, the currently produced lithium hexafluorophosphate is a high-purity product with a purity of more than 99.99%. As defined in the national standard, the content of impurity chlorides thereof is less than 1ppm, the content of the sulfate is less than 5ppm, the content of sodium ions in cations is less than 2ppm, and the contents of other cations are each less than 1ppm. A high-purity lithium hexafluorophosphate is a key factor in ensuring a safe operation of the battery.

However, during the use of lithium hexafluorophosphate, there are also many disadvantages. For example, when the lithium hexafluorophosphate contacts water, hydrogen fluoride is generated, which will cause deformation of the battery and reduce a service life of the battery; moreover, the lithium hexafluorophosphate is not resistant to high temperature, so a decomposition reaction occurs at 80°C to 100°C, from which phosphorus pentafluoride and lithium fluoride and the like are generated.

US patent US5916475 discloses a fluorine-containing lithium salt, i.e., lithium bisfluorosulfonylimide (LiFSI), which has better thermal stability and chemical stability, higher conductivity and lower corrosion rate than LiPF₆. It is considered as a kind of bis-fluorinated lithium salt that may replace LiPF₆, and will have an excellent application prospect in lithium batteries and supercapacitors. A recent research (ACS Applied Materials & Interfaces, Volume 11, Issue 29, Pages 25833-25843, 2019) suggests that when LiFSI is used as the main salt to formulate a solution of sulfolane as an electrolyte, the electrolyte not only has a low flammability, but also has a high compatibility with lithium metal anodes. Moreover, at a current density of 1.0mA/cm², it can still maintain a coulombic efficiency of 98% after 400 cycles. In ChemElectroChem, Volume 5, Issue 24, Pages 4008-4014, 2018, it was reported that even in high-voltage (greater than 4V) solid-state batteries, LiFSI still shows good stability and electrochemical performance in solid electrolyte polycarbonate. LiFSI also performs far better than LiPF₆ in terms of fast charging and discharging (Electrochemistry Communications, Volume 103, Pages 109-113, 2019). In Joule, Issue 8, Pages 1548-1558, 2018 and ACS Energy Letters, Volume 4, Issue 2, Pages 483-488, 2019, it was reported that a non-flammable electrolytic solution formulated by 1.2mol/L of LiFSI and triethyl phosphate (TEP) is not only highly safe, but also has a high coulombic efficiency (CCE, 97% up to 600 cycles). The excellent comprehensive performances of LiFSI have shown amazing results in each of lithium-air batteries (Chinese Chemical Letters, Volume 30, Issue 6, Pages 1289-1292, 2019), lithium-sulfur batteries (AngewandteChemie, International Edition, Volume 58, Issue 3, Pages 791-795, 2019), and high concentration (12M DME) solid-state batteries (Nano Energy, Volume 50, Pages 431-440, 2018). LiFSI provides a variety of possibilities for the development of the lithium battery industry and has broad development prospect. However, when LiFSI functions as the main electrolyte of the electrolytic solution, requirements on its purity are also greatly increased. Impurities contained in LiFSI itself such as chloride ions, sulfate radicals, water, acidic substances and cations will have negative effects on the positive electrodes, negative electrodes, separators, electrolytic solvents, additives of the batteries and the like, affect safety and cycle life, and will also become the main bottleneck for LiFSI's widespread use in batteries.

There are a variety of methods of preparing LiFSI, which may be summarized as an indirect method and a direct method. In the indirect method, LiFSI is obtained by first preparing a bisfluorosulfonylimide salt of a metal or an organic alkali, and then incurring an exchange reaction between the bisfluorosulfonylimide salt and a lithium salt. Patents US2013331609, US2012041233, EP2415757, US2011034716, and CN104085864A all relate to such a method. In addition to excessive use of metal or alkali, this method also leads to an impact on the quality caused by metal and alkali residues in the finished product. Moreover, the exchange reaction needs to take place in water, and repeated extraction and washing are required, which results in a decomposition of LiFSI. Another method is a direct method in which LiFSI is prepared by reacting bisfluorosulfonylimide with a lithium salt. US8377406 discloses a method for preparing LiFSI by directly reacting bisfluorosulfonylimide (HFSI) with lithium carbonate in an aqueous solution; CN104925765A and CN108002355 both reported a method for preparing LiFSI by reacting HFSI with lithium hydroxide, lithium carbonate, and lithium bicarbonate in an organic solvent. According to the method, the purity of the resulting product is only 99.86-99.88%, the content of the impurity fluoride ions is 21-27ppm, the content of chloride ions is 4.7-7.8ppm, and the content of sulfate radicals is 15-20ppm. CN106365132A reported a method for preparing LiFSI under pressure from HFSI and lithium fluoride; CN106241757A reported a method for preparing LiFSI by reacting HFSI with lithium chloride. The resulting product has a content of chloride ions of 5-8ppm and a content of sulfate radicals of 15-23ppm. In this type of direct method using inorganic lithium salt, water or small-molecule strong acids (such as hydrogen chloride, hydrogen fluoride, etc.) is generated during the reaction, which causes the decomposition of raw materials and products or leads to residues of chloride ions or fluoride ions, so the content of the product has to be improved by complex purification processes. French Arkema reported a LiFSI crystallization purification method (FR 3059994, Jun 15, 2018), which uses the extreme method of high vacuum thin-film distillation, but the purity of the purified product is only over 99.80%, and the impurity content is still high. In a typical embodiment, the water content is 40ppm, the content of chloride ions is 22ppm, and the content of sulfate radicals is 7ppm. This is because LiFSI is obtained in water. CN201810242600 can only control the content of chloride ions to be about 20ppm through a combination of addition of an organic alkali and crystallization. CN106976849 removes water from the product by adding acid anhydride and crystallization during a post-treatment process. The final water can only reach a content of 37-89ppm, and the purity is 99.91-99.96%.
Further methods belonging to the state of the art are described by CN 107 416 782 A, FR 3 088 931 A1, EP 3 466 872 A1, CN 109 734 061 A and CN 107 055 493 B.

At present, due to the limitations of LiFSI production technology, only a low-specification LiFSI can be obtained and used as an additive in the electrolytic solution to make up for some of the shortcomings of lithium hexafluorophosphate used as the main salt. If LiFSI is to be used as the main salt of the electrolytic solution of lithium battery to exhibit its excellent electrochemical performance, it must be a high-purity product. Therefore, the preparation of LiFSI with a purity of more than 99.99%, a water content of less than 20ppm, and a content of a sum of various anions and a content of a sum of various cations each being less than 10ppm is a technical problem to be urgently solved.

The present invention provides a method for preparing a high-specification LiFSI, in which: 1. a high-purity HFSI is used as a raw material; 2. a non-aqueous reaction system is used, and the reaction does not generate by-products such as water or strong acid with destructive properties; 3. the by-products have no destructive effect on the product; and 4. residues of by-products are precisely controlled through poor solvent crystallization. Various measures are combined to achieve the final effect.

### SUMMARY OF THE INVENTION

In order to solve the above problems, the present invention provides a method for preparing a high-purity bisfluorosulfonylimide salt as defined in the appended claims, wherein the preparation raw materials include at least bisfluorosulfonylimide, as HFSI, and M⁺ₙXⁿ⁻;
wherein M is selected from any one of Li, Na, K, Rb and Cs, X is an anion including at least one element of B, O, N, P and Si, and n≥2.
M⁺ₙXⁿ⁻ is a polybasic inorganic salt, including at least one of sulfate, sulfite, thiosulfate, phosphate, monohydrogen phosphate, phosphite, pyrophosphate, silicate, hexafluorosilicate, borate, molybdate, and chromate,
   or
a polybasic carboxylate, including at least one of oxalate, malonate, succinate, glutarate, adipate, sebacate, maleate, fumarate, tartaric acid disalt, glutamic acid disalt, cyclohexane tricarboxylate, phthalate (o-phthalate), isophthalate (m-phthalate), terephthalate (p-phthalate), 1,3,5-benzenetricarboxylate, citrate, ethylenediaminetetraacetic acid tetrasalt, ethylenediaminetetraacetic acid trisalt, and ethylenediaminetetraacetic acid disalt,
   or
a polybasic organic phenate, including at least one of catechol disalt, resorcinol disalt, hydroquinone disalt, diphenol disalt, bisphenol A disalt, salicylic acid disalt, p-hydroxybenzenesulfonic acid disalt, o-hydroxybenzenesulfonic acid disalt, and 5-sulfo-1,3-phthalic acid disalt.

As a preferred technical solution, the M⁺ₙXⁿ⁻ is selected from at least one of lithium sulfate, sodium phosphate, dipotassium malonate, rubidium sulfate, dicesium isophthalate, dilithium chromate dihydrate, lithium metasilicate, 3-hydroxy-2-oxopropyl phosphate dilithium, lithium tetraborate, lithium silicate, glyceryl phosphate dilithium, lithium orthosilicate, lithium sulfite, lithium molybdate, tetralithium diphosphate, lithium chromate, pentalithium triphosphate, dilithium phthalate, dilithium thiosulfate, dilithium hexafluorosilicate, dilithium adipate, dilithium sebacate, methylene bis(phosphonic acid) diethyl dilithium salt, 2-butenedioic acid dilithium salt, lithium oxalate, dilithium diphosphate, lithium maleate, dilithium azelate, lithium dichromate, lithium tartrate, lithium citrate, disodium malonate, disodium 2-hydroxyglutarate, disodium phenolphthalein monophosphate, disodium octaborate, dipotassium silicate, dipotassium sulfate, dipotassium peroxymonosulfate, rubidium chromate, bisphenol A dilithium, and bisphenol AF dilithium.

As a preferred technical solution, a water content in the M⁺ₙXⁿ⁻ is lower than 500 mass ppm, preferably less than 100 mass ppm.

The method includes the following steps: mixing bisfluorosulfonylimide and M⁺ₙXⁿ⁻ in a non-aqueous solvent, incurring a reaction, and carrying out a post-treatment to obtain the finished product.

The molar ratio of the bisfluorosulfonylimide to M⁺ₙXⁿ⁻ is 1: (0.5~4).

As a preferred technical solution, the temperature of the reaction is -20°C to 120°C, and the time of the reaction is 0.1h to 48h.

The post-treatment process includes filtering, vacuum concentration, and recrystallization in a poor solvent.

The non-aqueous solvent includes one of or a combination of more than one of: acetonitrile, propionitrile, butyronitrile, isobutyronitrile, malononitrile, cyclohexanonitrile, acrylonitrile, tetrahydrofuran, 2-methyltetrahydrofuran, 1,3-dioxolane, 1,4-dioxane, acetone, butanone, methyl isobutyl ketone, cyclopentanone, cyclohexanone, nitromethane, N, N-dimethylformamide, N, N-dimethylacetamide, methyl formate, methyl acetate, ethyl acetate, butyl acetate, isopropyl acetate, γ-butyrolactone, ethyl trifluoroacetate, methyl trifluoroacetate, dimethyl carbonate, diethyl carbonate, ethylene carbonate, propylene carbonate, ethyl methyl carbonate, ethyl ether, propyl ether, ethyl propyl ether, isopropyl ether, tert-butyl methyl ether, ethylene glycol dimethyl ether, ethylene glycol methyl ethyl ether, ethylene glycol diethyl ether, diethylene glycol dimethyl ether, triethylene glycol dimethyl ether, tetraethylene glycol dimethyl ether, N-methyl-2-pyrrolidone, pentane, hexane, heptane, octane, iso-octane, decane, dodecane, benzene, methylbenzene, dimethylbenzene, ethylbenzene, propylbenzene, trimethylbenzene, tetrahydronaphthalene, dichloromethane, dichloroethane, chloroform, trichloroethane, tetrachloroethane, tetrachloroethylene, trifluorotrichloroethane, chlorobutane, chlorocyclohexane, chlorobenzene, trichlorobenzene, fluorobenzene, and trifluoromethylbenzene.

The water content in the non-aqueous solvent is less than 100 mass ppm.

The purity of the bisfluorosulfonylimide is greater than 99.9%.

As a preferred technical solution, the purity of the bisfluorosulfonylimide is improved by crystallization; the crystallization takes place in an organic solvent, and the organic solvent includes at least one of alkanes, olefins, aromatic hydrocarbons, and chlorinated hydrocarbons.

As a preferred technical solution, a crystallization temperature of the bisfluorosulfonylimide is -50°C to 100°C, preferably -20°C to 17°C.

Advantageous effects: the present invention provides a method for preparing a high-purity bisfluorosulfonylimide salt in a non-aqueous system, wherein the reaction process is mild, no side reactions take place, the post-treatment is simple, the yield is good, and the purity is high.

### DETAILED DESCRIPTION OF THE EMBODIMENT(S) OF THE INVENTION

For the purpose of the following detailed description, it should be understood that various alternative variations and orders of steps may be adopted in the present invention, unless expressly specified to the contrary. Furthermore, all numbers indicating quantities of components such as those used in the specification and claims should be construed as being modified in all cases by the term "about", except in any instance of operation, or except in a case where they are otherwise indicated. Accordingly, unless indicated to the contrary, the numerical parameters set forth in the following description and claims are approximations that vary depending on desired performances to be achieved by the present invention. At least, it is not intended to limit the applicability of the principle of equivalence to the scope of the claims, and each numerical parameter should be interpreted at least according to the number of reported significant figures and by applying ordinary rounding techniques.

Although the ranges of numerical values and parameters that set forth the broad scope of the present invention are approximations, the numerical values listed in specific examples are reported as accurately as possible. Any numerical value, however, inherently contains certain errors necessarily resulting from the standard deviation found in their respective tests and measurements.

When a range of numerical values is disclosed herein, the range is considered continuous and includes minimum and maximum values in the range, as well as each value between the minimum and maximum values. Further, when the range refers to integers, each integer between the minimum value and the maximum value in the range is included. In addition, when multiple ranges are provided to describe a feature or characteristic, the ranges can be combined. In other words, unless otherwise indicated, all ranges disclosed herein are understood to include any and all subranges subsumed therein. For example, a specified range "from 1 to 10" should be considered as including any and all subranges between the minimum value of 1 and the maximum value of 10. Exemplary subranges of the range from 1 to 10 include, but are not limited to, 1 to 6.1, 3.5 to 7.8, 5.5 to 10, and the like.

According to a first aspect of the present invention, a method for preparing a bisfluorosulfonylimide salt is provided, wherein preparation raw materials include at least bisfluorosulfonylimide, and M⁺ₙXⁿ⁻;
wherein M is selected from any one of Li, Na, K, Rb and Cs, X is an anion including at least one element of B, O, N, P and Si, and n≥2.

The general formula of the bisfluorosulfonylimide salt is MFSI, and the structure of the bisfluorosulfonylimide salt is shown in Formula I:

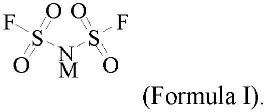

In an embodiment, when M is Li, MFSI is lithium bisfluorosulfonylimide.

In an embodiment, when M is Na, MFSI is sodium bisfluorosulfonylimide.

In an embodiment, when M is K, MFSI is potassium bisfluorosulfonylimide.

In an embodiment, when M is Rb, MFSI is rubidium bisfluorosulfonylimide.

In an embodiment, when M is Cs, MFSI is cesium bisfluorosulfonylimide.

As a preferred embodiment, the water content in the M⁺ₙXⁿ⁻ is less than 500ppm, preferably less than 100ppm.

### Bisfluorosulfonylimide

The structural formula of bisfluorosulfonylimide is shown in Formula II:

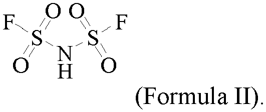

As a preferred embodiment, the method for preparing bischlorosulfonylimide is performed as follows: 825g of sulfamic acid and 1200g of chlorosulfonic acid are added into a 2000ml four-necked bottle, and the temperature is raised to 108°C; 2730g of thionyl chloride begins to be added dropwise for 12 hours, and the temperature is maintained for 8 hours; the tail gas is absorbed by water and liquid alkali. After the reaction, excessive thionyl chloride is first vacuum-removed by a water pump, and then vacuum rectification is performed by an oil pump to collect a fraction of 110°C/8.6mbar, whereby the finished product is obtained.

As another preferred embodiment, the method for preparing bischlorosulfonylimide is performed as follows: 1600g of bischlorosulfonylimide is added into a 1000mL PTFE reactor, and stirring is started; 16g of methanol is put in, and the temperature is raised to 100°C; 500g of anhydrous hydrogen fluoride gas begins to be blown in at a constant speed, the reaction temperature is maintained at 100±5°C, and the reaction lasts for 16 hours. When the acid value drops below 340mgKOH/g, the reaction is stopped. Nitrogen is blown in for purging for 4 hours to remove the hydrogen fluoride, a crude product rectification is performed to collect a fraction of 60-62°C/25mbar, whereby the finished product is obtained.

The applicant has found that the purity of the bisfluorosulfonylimide greatly affects both the yield and purity of the subsequent preparation of a high-purity bisfluorosulfonylimide salt.

As a preferred embodiment, the purity of the bisfluorosulfonylimide is improved by crystallization; wherein the crystallization may take place without a solvent or in an organic solvent.

The crystallization may take place in a stirred state or may be a static crystallization; it may be a batch crystallization or a continuous crystallization.

As a preferred embodiment, the crystallization takes place in an organic solvent, and the organic solvent includes at least one of alkanes, olefins, aromatic hydrocarbons, and chlorinated hydrocarbons.

Examples of alkanes include, but are not limited to, pentane, hexane, heptane, and octane.

Examples of olefins include, but are not limited to, butadiene, cyclopentadiene, and cyclohexene.

Examples of aromatic hydrocarbons include, but are not limited to, benzene, dimethylbenzene, and methylbenzene.

Examples of chlorinated hydrocarbons include, but are not limited to, chlorobenzene, fluorobenzene, dichlorobenzene, trifluoromethylbenzene, dichloromethane, dichloroethane, dichloropropane, trichloroethane, tetrachloroethane, and tetrachloroethylene.

As a preferred embodiment, the method for preparing the bisfluorosulfonylimide high-purity product is performed as follows:

450-550g of bisfluorosulfonylimide rectified product is added into a reactor and stirring is started; 150-250g of dichloromethane is put in, and the temperature is raised to 40±5°C, followed by stirring and dissolving; the temperature is slowly lowered at a cooling rate of 1-3 degrees/hour; finally, a crystallization temperature is maintained at -10±0.5°C, and the temperature is kept for 5-7 hours; filtering is performed in a low-temperature glove box; after the filtered cake is melted, the solvent is vacuum-removed to obtain bisfluorosulfonylimide.

As another preferred embodiment, the method for preparing the bisfluorosulfonylimide high-purity product is performed as follows:

450-550g of liquid bisfluorosulfonylimide rectified product is added into a jacketed reaction kettle and stirring is started; the temperature is slowly lowered at a cooling rate of 1-3 degrees/hour; finally, a crystallization temperature is maintained at 0±0.2°C, and the temperature is kept for 5-7 hours; a mother liquor is discharged, and the residual solids are slightly heated to 18°C-25°C and melted to form bisfluorosulfonylimide high-purity product.

The purity of the bisfluorosulfonylimide is greater than 99.5%.

### M⁺ₙXⁿ⁻

M is selected from any one of Li, Na, K, Rb and Cs, X is an anion including at least one element of B, O, N, P and Si, and n≥2.

As a preferred technical solution, the M⁺ₙXⁿ⁻ is selected from one of polybasic inorganic salt, polybasic carboxylate and polybasic organic phenate.
M⁺ₙXⁿ⁻ is a polybasic inorganic salt, including at least one of sulfate, sulfite, thiosulfate, phosphate, monohydrogen phosphate, phosphite, pyrophosphate, silicate, hexafluorosilicate, borate, molybdate, and chromate, or
a polybasic carboxylate, including at least one of oxalate, malonate, succinate, glutarate, adipate, sebacate, maleate, fumarate, tartaric acid disalt, glutamic acid disalt, cyclohexane tricarboxylate, phthalate, isophthalate, terephthalate, 1,3,5-benzenetricarboxylate, citrate, ethylenediaminetetraacetic acid tetrasalt, ethylenediaminetetraacetic acid trisalt, and ethylenediaminetetraacetic acid disalt or
a polybasic organic phenate, including at least one of catechol disalt, resorcinol disalt, hydroquinone disalt, diphenol disalt, bisphenol A disalt, salicylic acid disalt, p-hydroxybenzenesulfonic acid disalt, o-hydroxybenzenesulfonic acid disalt, and 5-sulfo-1,3-phthalic acid disalt.

As a preferred embodiment, the M⁺ₙXⁿ⁻ is selected from at least one of lithium sulfate, sodium phosphate, dipotassium malonate, rubidium sulfate, dicesium isophthalate, dilithium chromate dihydrate, lithium metasilicate, 3-hydroxy-2-oxopropyl phosphate dilithium, lithium tetraborate, lithium silicate, glyceryl phosphate dilithium, lithium orthosilicate, lithium sulfite, lithium molybdate, tetralithium diphosphate, lithium chromate, pentalithium triphosphate, dilithium phthalate, dilithium thiosulfate, dilithium hexafluorosilicate, dilithium adipate, dilithium sebacate, methylene bis(phosphonic acid) diethyl dilithium salt, 2-butenedioic acid dilithium salt, lithium oxalate, dilithium diphosphate, lithium maleate, dilithium azelate, lithium dichromate, lithium tartrate, lithium citrate, disodium malonate, disodium 2-hydroxyglutarate, disodium phenolphthalein monophosphate, disodium octaborate, dipotassium silicate, dipotassium sulfate, dipotassium peroxymonosulfate, rubidium chromate, bisphenol A dilithium, and bisphenol AF dilithium.

The CAS number of the dilithium chromate is 14307-35-8. The CAS number of the lithium metasilicate is 10102-24-6. The CAS number of the 3-hydroxy-2-oxopropyl phosphate dilithium is 102783-56-2. The CAS number of the lithium silicate is 12627-14-4. The CAS number of the glyceryl phosphate dilithium is 1300-23-8. The CAS number of the lithium orthosilicate is 13453-84-4. The CAS number of the tetralithium diphosphate is 13843-41-9. The CAS number of the pentalithium triphosphate is 15804-33-8. The CAS number of the dilithium phthalate is 15968-00-0. The CAS number of the dilithium thiosulfate is 16992-28-2. The CAS number of the dilithium silicate is 17347-95-4. The CAS number of the dilithium adipate is 18621-94-8. The CAS number of the dilithium sebacate is 19370-86-6. The CAS number of the methylene bis(phosphonic acid) diethyl dilithium salt is 194931-67-4. The CAS number of the butenedioic acid dilithium salt is 24820-18-6. The CAS number of the dilithium diphosphate is 33943-47-4. The CAS number of the lithium maleate is 34895-26-6. The CAS number of the dilithium azelate is 38900-29-7. The CAS number of the lithium dichromate is 52478-50-9. The CAS number of the lithium tartrate is 868-17-7. The CAS number of the bisphenol A dilithium is 67306-98-3. The CAS number of the bisphenol AF dilithium is 128968-16-1.

The method for preparing the bisfluorosulfonylimide salt includes the following steps:
mixing bisfluorosulfonylimide and M⁺ₙXⁿ⁻ in a non-aqueous solvent and incurring a reaction, and performing a post-treatment to obtain the bisfluorosulfonylimide salt.

In an embodiment, the preparation of the bisfluorosulfonylimide salt is performed in a dry inert gas atmosphere.

In an embodiment, the dry inert gas includes one of or a combination of more than one of nitrogen, argon, or helium.

Preferably, the dry inert gas is nitrogen.

In an embodiment, the temperature of the reaction is -20°C to 120°C; taking into consideration the stability of the materials, the safety and controllability of the reaction, the purity of the bisfluorosulfonylimide salt, etc., the temperature of the reaction is preferably 0 to 40°C.

In an embodiment, the time of the reaction is 0.1 to 48 hours; taking into consideration the stability of the materials, the safety and controllability of the reaction, the purity of the bisfluorosulfonylimide salt, etc., the time of the reaction is preferably 1 to 20 hours, more preferably 1 to 15 hours.

The non-aqueous solvent includes one of or a combination of more than one of: acetonitrile, propionitrile, butyronitrile, isobutyronitrile, malononitrile, cyclohexanonitrile, acrylonitrile, tetrahydrofuran, 2-methyltetrahydrofuran, 1,3-dioxolane, 1,4-dioxane, acetone, butanone, methyl isobutyl ketone, cyclopentanone, cyclohexanone, nitromethane, N, N-dimethylformamide, N, N-dimethylacetamide, methyl formate, methyl acetate, ethyl acetate, butyl acetate, isopropyl acetate, γ-butyrolactone, ethyl trifluoroacetate, methyl trifluoroacetate, dimethyl carbonate, diethyl carbonate, ethylene carbonate, propylene carbonate, ethyl methyl carbonate, ethyl ether, propyl ether, ethyl propyl ether, isopropyl ether, tert-butyl methyl ether, ethylene glycol dimethyl ether, ethylene glycol methyl ethyl ether, ethylene glycol diethyl ether, diethylene glycol dimethyl ether, triethylene glycol dimethyl ether, tetraethylene glycol dimethyl ether, N-methyl-2-pyrrolidone, pentane, hexane, heptane, octane, iso-octane, decane, dodecane, benzene, methylbenzene, dimethylbenzene, ethylbenzene, propylbenzene, trimethylbenzene, tetrahydronaphthalene, dichloromethane, dichloroethane, chloroform, trichloroethane, tetrachloroethane, tetrachloroethylene, trifluorotrichloroethane, chlorobutane, chlorocyclohexane, chlorobenzene, trichlorobenzene, fluorobenzene, and trifluoromethylbenzene.

The water content in the non-aqueous solvent is less than 100 mass ppm.

In an embodiment, the amount of the non-aqueous solvent is 0.2 to 10 times a theoretical weight of the bisfluorosulfonylimide salt product; taking into consideration the product yield and the purity, the amount of the non-aqueous solvent is preferably 1 to 3 times the theoretical weight of the bisfluorosulfonylimide salt product.

The molar ratio of the bisfluorosulfonylimide to M⁺ₙXⁿ⁻ is 1: (0.5~4).

In a preferred embodiment, the molar ratio of the bisfluorosulfonylimide to M⁺ₙXⁿ⁻ is 1: (0.5~2).

Ways of mixing the bisfluorosulfonylimide, M⁺ₙXⁿ⁻ and non-aqueous solvent are not limited, and any way will fall within the scope of the present invention. Generally, it is preferred to adopt a way which facilitates industrialized production operations.

The post-treatment process includes filtering, vacuum concentration, and recrystallization in a poor solvent.

In a preferred embodiment, the post-treatment process includes filtering, vacuum concentration, recrystallization in a poor solvent, refiltration, and drying.

The purpose of filtering during the post-treatment of the bisfluorosulfonylimide salt solution is to remove by-products from the bisfluorosulfonylimide salt solution.

The purpose of the refiltration is to remove the filtrate to obtain the bisfluorosulfonylimide salt.

The purpose of the vacuum concentration, i.e., vacuum distillation, is to remove the non-aqueous solvent.

In an embodiment, a vacuum degree of the vacuum concentration is 100Pa to 10kPa, and the temperature range is 0 to 60°C.

In an embodiment, the poor solvent includes one of or a combination of more than one of benzene, methylbenzene, o-dimethylbenzene, m-dimethylbenzene, p-dimethylbenzene, chlorobenzene, o-dichlorobenzene, m-dichlorobenzene, p-dichlorobenzene, hexane, heptane, octane, dichloromethane, trichloromethane, carbon tetrachloride, 1,2-dichloroethane, 1,1-dichloroethane, 1,1,2-trichloroethane, tetrachloroethane, tetrachloroethylene, 1,2,3-trichloropropane, n-propyl ether, n-butyl ether, isopropyl ether, and ethylene glycol dibutyl ether.

If a combination of two or more non-aqueous solvents is added during the reaction and a poor solvent already exists, then no poor solvent is required to be added any more during the crystallization.

In an embodiment, the amount of the poor solvent is 1 to 50 times a theoretical weight of the bisfluorosulfonylimide salt product; taking into consideration the yield and the purity of the bisfluorosulfonylimide salt, the amount of the poor solvent is preferably 2 to 10 times the theoretical weight of the bisfluorosulfonylimide salt product.

In an embodiment, a vacuum degree of the drying is 100Pa to 10kPa, and the temperature range is 0 to 60°C. The specific embodiments are not limited, and any of the embodiments will fall within the scope of the present invention, as long as it facilitates industrialized production operations.

The principle of the present invention is described as follows:

HFSI + M⁺ₙXⁿ⁻ → MFSI + M⁺₍ₙ₋₁₎HX⁽ⁿ⁻¹⁾⁻.

The applicant finds through research that when a reaction takes place in a non-aqueous solvent between bisfluorosulfonylimide (HFSI) and M⁺ₙXⁿ⁻ (n≥2) at a certain ratio, after a series of post-treatments such as filtration, vacuum concentration, and crystallization in a poor solvent, a high-quality, high-yield bisfluorosulfonylimide salt can be obtained. This is because HFSI is a strong acid and M⁺ₙXⁿ⁻ is a weak alkali. When they contact and have an acid-alkali neutralization reaction, a complete conversion is very easily realized, and no side reactions are found. Moreover, in a suitable reaction solvent, the raw material HFSI and the resulting product are dissolved in the reaction solvent, whereas the raw material M⁺ₙXⁿ⁻ and a resulting by-product M⁺₍ₙ₋₁₎HX⁽ⁿ⁻¹⁾⁻ are insoluble in the reaction solvent. After the reaction, a product solution and by-product solids can be obtained by filtration. Then, after concentrating the product solution and adding a poor solvent for precipitation, a high-quality, high-yield bisfluorosulfonylimide salt is obtained. The by-product M⁺₍ₙ₋₁₎HX⁽ⁿ⁻¹⁾⁻ is neutralized with a basic salt MOH or M₂CO₃ in an aqueous phase. After being filtered and dried, it can be converted into the main raw material M⁺ₙXⁿ⁻ again, thereby achieving the effects of recycling and producing no "three wastes". The applicant also finds that the purity and yield of the obtained bisfluorosulfonylimide salt will decrease to a certain extent when n=1 in the M⁺ₙXⁿ⁻, which is mainly due to the formation of water, or the formation of an acid dissolved in the reaction system. For example, when MX is lithium hydroxide, sodium hydroxide, and potassium hydroxide, one equivalent of water is generated, and a side reaction of hydrolysis of the product MFSI occurs, thereby generating impurity ions. For example, when MX is LiCl, LiF, NaBr, KI, LiBF₄, LiClO₄, etc., the reaction generates another molecule that is a strongly acidic substance; on one hand, the conversion is incomplete in the reaction, and on the other hand, the strong acids HCl, HF, HBr, HI, HBF₄, HClO₄, etc., have a certain solubility in a non-aqueous solvent, making it difficult to remove them completely and leading to residual impurity ions; the strong acids even react with certain polar solvents, such as acetonitrile, ether solvents, amide solvents, ester solvents, etc., to generate alcohol impurities and acid impurities, which will further reduce the quality of the product.

The applicant has found that the selection of non-aqueous solvent and the amount of the poor solvent have a greater impact on the yield and purity of the product. If a non-aqueous solvent with a higher polarity is used, the raw materials will have a better solubility in the non-aqueous solvent, which is advantageous for the reaction occurring in the forward direction. However, if the polarity is too high, the solubility of the by-product M⁺₍ₙ₋₁₎HX⁽ⁿ⁻¹⁾⁻ in the solvent will increase. By adding another solvent with a lower polarity for combination, the best effect of complete reaction conversion and a small amount of dissolved by-products can be achieved. In the process of vacuum-removing the solvent, the residual amount of the non-aqueous solvent with a higher polarity is accurately controlled so as to dissolve a small amount of residual impurities; in the process of crystallization, the amount of added poor solvent is precisely controlled to obtain a higher yield; when the two ways are combined with each other, the best effect of high yield and high purity can be obtained.

The applicant finds through research that a slight excess of M⁺ₙXⁿ⁻ can improve the yield and purity of the product. It is speculated the possible reason is that a slight excess of M⁺ₙXⁿ⁻ can promote the complete conversion in the reaction, and at the same time, the residual M⁺ₙXⁿ⁻ can be easily removed by filtration without affecting the quality of the product. When the molar ratio of bisfluorosulfonylimide to M⁺ₙXⁿ⁻ is 1: (0.5~4), the yield and purity of the bisfluorosulfonylimide salt are good, and an improper control will result in a failure of obtaining a high-quality target product, causing a higher difficulty in the discovery of the present application. In the present application, this technical solution is obtained through creative research without introducing other elements or ions, or introducing substances that are difficult to separate.

In addition, unless otherwise specified, the solvents and reagents as used are purchased from Shanghai Aladdin Bio-Chem Technology Co., Ltd.

The present invention is described in detail below through examples and embodiments.

### Preparation Example 1

A method for preparing bischlorosulfonylimide is performed as follows: 825g of sulfamic acid and 1200g of chlorosulfonic acid are added into a 2000ml four-necked bottle, and the temperature is raised to 108°C; 2730g of thionyl chloride begins to be added dropwise for 12 hours, and the temperature is maintained for 8 hours; the tail gas is absorbed by water and liquid alkali. After the reaction, excessive thionyl chloride is first vacuum-removed by a water pump, and then vacuum-rectification is performed by an oil pump to collect a fraction of 110°C/8.6mbar and obtain a 1386g of intermediate fraction, wherein the content is 98.5% and the yield is 77%.

### Preparation Example 2

A method for preparing bisfluorosulfonylimide is performed as follows: 1600g of bischlorosulfonylimide is added into a 1000mL PTFE reactor, and stirring is started; 16g of methanol is put in, and the temperature is raised to 100°C; 500g of anhydrous hydrogen fluoride gas begins to be blown in at a constant speed, the reaction temperature is maintained at 100±5°C, and the reaction lasts for 16 hours. When the acid value drops below 340mgKOH/g, the reaction is stopped. Nitrogen is blown in for purging for 4 hours to remove the hydrogen fluoride, a crude product rectification is performed to collect a fraction of 60-62°C/25mbar and obtain 1150g of an intermediate fraction of rectified product, which is a bisfluorosulfonylimide rectified product, wherein the yield is 85.0%, the purity is 99.0%, the content of sulfate radicals is 0.45%, the content of fluoride ions is 0.20%, the content of chloride ions is 0.004%, and the content of sulfamic acid is 0.35%.

### Purification Example 1

The method for preparing bisfluorosulfonylimide high-purity product is performed as follows:
500g of bisfluorosulfonylimide rectified product is added into a 1000mL PTFE reactor and stirring is started; 200g of dichloromethane is put in, and the temperature is raised to 40°C, followed by stirring and dissolving; the temperature is slowly lowered by ice-salt bath at a cooling rate of 2 degrees/hour; finally, a crystallization temperature is maintained at -10±0.2°C, and the temperature is kept for 6 hours; filtering is performed in a low-temperature glove box; after the filtered cake is melted, the solvent is vacuum-removed to obtain 380g of bisfluorosulfonylimide, wherein the yield is 76%, the purity is 99.97%, the content of sulfate radicals is 76ppm, the content of fluoride ions is 55ppm, the content of chloride ions is 8ppm, and the content of sulfamic acid is 88ppm.
¹H-NMR (CDCl3): 7.81, s, 1H. ¹⁹F-NMR (CDCl3): 58.9. Melting point: 17°C

### Purification Example 2

The method for preparing bisfluorosulfonylimide high-purity product is performed as follows:
550g of liquid bisfluorosulfonylimide rectified product is added into a 1000mL jacketed reaction kettle and stirring is stopped; the temperature is slowly lowered by ice-salt bath at a cooling rate of about 2 degrees/hour; finally, a crystallization temperature is maintained at 0±0.2°C, and the temperature is kept for 6 hours; a mother liquor is discharged, and the residual solids are slightly heated to 20°C and melted to form 460g of bisfluorosulfonylimide high-purity product, wherein the yield is 92%, the purity is 99.95%, the content of sulfate radicals is 123ppm, the content of fluoride ions is 77ppm, the content of chloride ions is 10ppm, and the content of sulfamic acid is 220ppm.

The method of detecting the bisfluorosulfonylimide: an ion chromatography is used to determine the purity of the bisfluorosulfonylimide; the yield (%) = the actual product weight/the theoretical product weight × 100%; the method of detecting chloride ions: an ion chromatograph is used for detection; the method of detecting moisture: a Karl Fischer moisture titrator from METTLER TOLEDO Company is used for detection; the method of detecting acid value: neutralization value method for petroleum products and lubricants according to National Standard GB/T 4954-2002 is used for determination.

### Embodiment 1

Embodiment 1 of the present invention provides a lithium bisfluorosulfonylimide salt, and the preparation raw materials are the bisfluorosulfonylimide high-purity product obtained in Purification Example 2, lithium sulfate, and non-aqueous solvent acetonitrile.

The method for preparing the lithium bisfluorosulfonylimide salt is performed as follows:
at room temperature, in a nitrogen atmosphere, 300g of non-aqueous solvent acetonitrile and 220g (2.0mol) of anhydrous lithium sulfate are added into a 1000ml reaction bottle, and the temperature is lowered to 0-10°C while stirring. 181g (1.0mol) of self-made bisfluorosulfonylimide high-purity product is added dropwise for 2 hours. Then, stirring is performed at 0-10°C for 6 hours, and the reaction solution is sampled and tested for the acid value to reach the end of the reaction.

The reaction solution is placed in a glove box and filtered to obtain a mixture of by-products lithium sulfate and lithium hydrogen sulfate. The filtrate is vacuum-concentrated at 30°C to 35°C into a thick, translucent solid-liquid mixture, and 800g of poor solvent tetrachloroethane is then added. The temperature is lowered to 0°C by a cold water bath, and a large amount of white solids are separated due to crystallization, transferred into the glove box for refiltration, and vacuum-dried at 40°C to 50°C for 6 hours to obtain 182.1g of lithium bisfluorosulfonylimide in a form of white powder. According to ICP detection, Na is 0.3ppm, K is 0.2ppm, Ca is 0.1ppm, and others (Fe/Cu/Zn/Pb) are each less than 1.0ppm.

The water content in the non-aqueous solvent acetonitrile is 10ppm.

**The** water content in the poor solvent tetrachloroethane is 12ppm.

The water content in the raw material lithium sulfate is 17ppm.

### Embodiment 2

Embodiment 2 of the present invention provides a lithium bisfluorosulfonylimide salt, and the preparation raw materials are the bisfluorosulfonylimide high-purity product obtained in Purification Example 2, dilithium malonate, non-aqueous solvent dimethyl carbonate, and dichloroethane.

The method for preparing the lithium bisfluorosulfonylimide salt is performed as follows:
at room temperature, in a nitrogen atmosphere, 232g (2.0mol) of anhydrous dilithium malonate is added to 200g of non-aqueous solvent dimethyl carbonate and 800g of dichloroethane (water content being 35ppm) in a 2000ml reaction bottle, and the temperature is lowered to 10°C to 20°C while stirring. 181g (1.0mol) of self-made bisfluorosulfonylimide high-purity product is added dropwise for 4 hours. Then, stirring is performed at 10°C to 20°C for 8 hours, and the reaction solution is sampled and tested for the acid value to reach the end of the reaction.

The reaction solution is placed in a glove box and filtered to obtain a mixture of by-products dilithium malonate and lithium hydrogen malonate. The filtrate is vacuum-concentrated at 35°C to 45°C into a thick, translucent solid-liquid mixture, and 800g of poor solvent dichloroethane is then added. The temperature is lowered to 0°C by a cold water bath, and a large amount of white solids are separated due to crystallization, transferred into the glove box for refiltration, and vacuum-dried at 40°C to 50°C for 12 hours to obtain 180.3g of lithium bisfluorosulfonylimide in a form of white powder. According to ICP detection, Na is 0.4ppm, K is 0.2ppm, Ca is 0.2ppm, and others (Fe/Cu/Zn/Pb) are each less than 1.0ppm.

The water content in the non-aqueous solvent dimethyl carbonate is 16ppm.

The water content in the poor solvent dichloroethane is 22ppm.

The water content in the raw material dilithium malonate is 34ppm.

### Embodiment 3

Embodiment 3 of the present invention provides a sodium bisfluorosulfonylimide salt, and the preparation raw materials are the bisfluorosulfonylimide high-purity product obtained in Purification Example 2, sodium phosphate, and non-aqueous solvent nitromethane.

The method for preparing the sodium bisfluorosulfonylimide salt is performed as follows:

at room temperature, in a nitrogen atmosphere, 500g of non-aqueous solvent nitromethane and 115.8g (1.0mol) of anhydrous sodium phosphate are added into a 1000ml reaction bottle, and the temperature is controlled at 20°C to 40°C while stirring. 181g (1.0mol) of self-made bisfluorosulfonylimide is added dropwise for 2 hours. Then, stirring is performed at 20°C to 40°C for 6 hours, and the reaction solution is sampled and tested for the acid value to reach the end of the reaction.

The reaction solution is placed in a glove box and filtered to obtain a by-product sodium hydrogen phosphate. The filtrate is vacuum-concentrated at 50°C to 55°C into a thick, translucent solid-liquid mixture, and 800g of poor solvent dichloroethane is then added. The temperature is lowered to 0°C by a cold water bath, and a large amount of white solids are separated due to crystallization, transferred into the glove box for refiltration, and vacuum-dried at 50°C to 60°C for 8 hours to obtain 197.0g of sodium bisfluorosulfonylimide in a form of white powder. According to ICP detection, K is 0.8ppm, Ca is 0.6ppm, and others (Fe/Cu/Zn/Pb) are each less than 1.0ppm.

The water content in the non-aqueous solvent nitromethane is 76ppm.

The water content in the poor solvent dichloroethane is 22ppm.

The water content in the raw material anhydrous sodium phosphate is 80ppm.

### Embodiment 4

Embodiment 4 of the present invention provides a potassium bisfluorosulfonylimide salt, and the preparation raw materials are the bisfluorosulfonylimide high-purity product obtained in Purification Example 2, dipotassium hydroquinone, and non-aqueous solvent ethyl acetate.

The method for preparing the potassium bisfluorosulfonylimide salt is performed as follows:
at room temperature, in a nitrogen atmosphere, 500g of non-aqueous solvent ethyl acetate and 186g (0.75mol) of dipotassium hydroquinone are added into a 1000ml reaction bottle, and the temperature is lowered to 10°C to 20°C while stirring. 181g (1.0mol) of self-made bisfluorosulfonylimide is added dropwise for 2 hours. Then, stirring is performed at 20°C to 30°C for 6 hours, and the reaction solution is sampled and tested for the acid value to reach the end of the reaction.

The reaction solution is placed in a glove box and filtered to obtain a by-product. The filtrate is vacuum-concentrated at 40°C to 45°C into a thick solid-liquid mixture, and 800g of poor solvent dichloromethane is then added. The temperature is lowered to 0°C by a cold water bath, and a large amount of white solids are separated due to crystallization, transferred into the glove box for refiltration, and vacuum-dried at 50°C to 60°C for 8 hours to obtain 208.1g of potassium bisfluorosulfonylimide in a form of white powder. According to ICP detection, Na is 0.9ppm, Ca is 0.4ppm, and others (Fe/Cu/Zn/Pb) are each less than 1.0ppm.

The water content in the non-aqueous solvent ethyl acetate is 88ppm.

The water content in the poor solvent dichloromethane is 36ppm.

The water content in the raw material dipotassium hydroquinone is 92ppm.

### Embodiment 5

Embodiment 5 of the present invention provides a rubidium bisfluorosulfonylimide salt, and the preparation raw materials are the bisfluorosulfonylimide high-purity product obtained in Purification Example 2, rubidium sulfate, and non-aqueous solvent N, N-dimethylformamide.

The method for preparing the rubidium bisfluorosulfonylimide salt is performed as follows:
at room temperature, in a nitrogen atmosphere, 100g of non-aqueous solvent N, N-dimethylformamide and 26.7g (0.10mol) of rubidium sulfate are added into a 250ml reaction bottle, and the temperature is lowered to 10°C to 20°C while stirring. 18.1g (0.10mol) of self-made bisfluorosulfonylimide is added dropwise for 1 hour. Then, stirring is performed at 30°C to 40°C for 3 hours, and the reaction solution is sampled and tested for the acid value to reach the end of the reaction.

The reaction solution is placed in a glove box and filtered to obtain a by-product. The filtrate is vacuum-concentrated at 60°C to 70°C into a thick solid-liquid mixture, and 100g of poor solvent dibutyl ether is then added. The temperature is lowered to 0°C by a cold water bath, and white solids are separated due to crystallization, transferred into the glove box for refiltration, and vacuum-dried at 60°C to 70°C for 4 hours to obtain 25.5g of rubidium bisfluorosulfonylimide in a form of white powder. According to ICP detection, Na is 1.3ppm, K is 0.8ppm, Ca is 0.7ppm, and others (Fe/Cu/Zn/Pb) are each less than 1.0ppm.

The water content in the non-aqueous solvent N, N-dimethylformamide is 63ppm.

The water content in the poor solvent dibutyl ether is 85ppm.

The water content in the raw material rubidium sulfate is 70ppm.

### Embodiment 6

Embodiment 6 of the present invention provides a cesium bisfluorosulfonylimide salt, and the preparation raw materials are the bisfluorosulfonylimide high-purity product obtained in Purification Example 2, dicesium isophthalate, and non-aqueous solvent dimethyl carbonate.

The method for preparing the cesium bisfluorosulfonylimide salt is performed as follows:
at room temperature, in a nitrogen atmosphere, 200g of non-aqueous solvent dimethyl carbonate and 129.0g (0.30mol) of dicesium isophthalate are added into a 500ml reaction bottle, and the temperature is controlled at 30°C to 40°C while stirring. 36.2g (0.20mol) of self-made bisfluorosulfonylimide is added dropwise for 1 hour. Then, stirring is performed at 30°C to 40°C for 3 hours, and the reaction solution is sampled and tested for the acid value to reach the end of the reaction.

The reaction solution is placed in a glove box and filtered to obtain a by-product. The filtrate is vacuum-concentrated at 40°C to 50°C into a thick solid-liquid mixture, and 200g of poor solvent methylbenzene is then added. The temperature is lowered to 0°C by a cold water bath, and white solids are separated due to crystallization, transferred into the glove box for refiltration, and vacuum-dried at 60°C to 70°C for 4 hours to obtain 59.8g of cesium bisfluorosulfonylimide in a form of white powder. According to ICP detection, Na is 2.3ppm, K is 1.2ppm, Ca is 0.9ppm, and others (Fe/Cu/Zn/Pb) are each less than 1.0ppm.

The water content in the non-aqueous solvent dimethyl carbonate is 16ppm.

The water content in the poor solvent methylbenzene is 85ppm.

The water content in the raw material dicesium isophthalate is 230ppm.

### Embodiment 7

Embodiment 7 of the present invention provides a lithium bisfluorosulfonylimide salt, and the preparation raw materials are the bisfluorosulfonylimide high-purity product obtained in Purification Example 2, lithium tetraborate, and nonaqueous solvent butanone.

The method for preparing the lithium bisfluorosulfonylimide salt is performed as follows:
at room temperature, in a nitrogen atmosphere, 300g of non-aqueous solvent butanone and 340g (2.0mol) of lithium tetraborate are added into a 1000ml reaction bottle, and the temperature is lowered to 10°C to 15°C while stirring. 181g (1.0mol) of self-made bisfluorosulfonylimide is added dropwise for 2 hours. Then, stirring is performed at 10°C to 15°C for 8 hours, and the reaction solution is sampled and tested for the acid value to reach the end of the reaction.

The reaction solution is placed in a glove box and filtered. The filtrate is vacuum-concentrated at 30°C to 35°C into a thick, translucent solid-liquid mixture, and 800g of poor solvent ethylene glycol dibutyl ether is then added. The temperature is lowered to 0°C by a cold water bath, and a large amount of white solids are separated due to crystallization, transferred into the glove box for refiltration, and vacuum-dried at 40°C to 50°C for 6 hours to obtain 180.8g of lithium bisfluorosulfonylimide in a form of white powder. According to ICP detection, Na is 0.4ppm, K is 0.4ppm, Ca is 0.2ppm, and others (Fe/Cu/Zn/Pb) are each less than 1.0ppm.

The water content in the non-aqueous solvent butanone is 87ppm.

The water content in the poor solvent ethylene glycol dibutyl ether is 90ppm.

The water content in the raw material lithium tetraborate is 74ppm.

### Embodiment 8

Embodiment 8 of the present invention provides a lithium bisfluorosulfonylimide salt, and the preparation raw materials are the bisfluorosulfonylimide high-purity product obtained in Purification Example 2, lithium silicate, and non-aqueous solvent tetrahydrofuran.

The method for preparing the lithium bisfluorosulfonylimide salt is performed as follows:
at room temperature, in a nitrogen atmosphere, 500g of non-aqueous solvent tetrahydrofuran and 180g (2.0mol) of lithium silicate are added into a 1000ml reaction bottle, and the temperature is lowered to -10°C to 0°C while stirring. 181g (1.0mol) of self-made bisfluorosulfonylimide is added dropwise for 2 hours. Then, stirring is performed at -10°C to 0°C for 8 hours, and the reaction solution is sampled and tested for the acid value to reach the end of the reaction.

The reaction solution is placed in a glove box and filtered. 800g of poor solvent dimethylbenzene is added into the filtrate to obtain a mixed solvent, which is then vacuum-concentrated at 30°C to 35°C into a thick, translucent solid-liquid mixture. The temperature is lowered to 0°C by a cold water bath, and a large amount of white solids are separated due to crystallization, transferred into the glove box for refiltration, and vacuum-dried at 40°C to 50°C for 6 hours to obtain 172.0g of lithium bisfluorosulfonylimide in a form of white powder. According to ICP detection, Na is 0.3ppm, K is 0. 1ppm, Ca is 0.2ppm, and others (Fe/Cu/Zn/Pb) are each less than 1.0ppm.

The water content in the non-aqueous solvent tetrahydrofuran is 56ppm.

The water content in the poor solvent dimethylbenzene is 21ppm.

The water content in the raw material lithium silicate is 55ppm.

### Embodiment 9

Embodiment 9 of the present invention provides a lithium bisfluorosulfonylimide salt, and the preparation raw materials are the bisfluorosulfonylimide high-purity product obtained in Purification Example 2, pentalithium triphosphate, and a mixture of non-aqueous solvent acetonitrile and chlorobenzene.

The method for preparing the lithium bisfluorosulfonylimide salt is performed as follows:
at room temperature, in a nitrogen atmosphere, a mixture of 300g of non-aqueous solvent acetonitrile and 600g of chlorobenzene (water content being 32ppm) and 160g (0.5mol) of pentalithium triphosphate are added into a 2000ml reaction bottle, and the temperature is lowered to 15°C to 20°C while stirring. 181g (1.0mol) of self-made bisfluorosulfonylimide is added dropwise for 2 hours. Then, stirring is performed at 15°C to 20°C for 6 hours, and the reaction solution is sampled and tested for the acid value to reach the end of the reaction.

The reaction solution is placed in a glove box and filtered. The filtrate is vacuum-concentrated at 30°C to 35°C into a thick, translucent solid-liquid mixture, and 300g of poor solvent chlorobenzene is then added. The temperature is lowered to 0°C by a cold water bath, and a large amount of white solids are separated due to crystallization, transferred into the glove box for refiltration, and vacuum-dried at 40°C to 50°C for 6 hours to obtain 182.4g of lithium bisfluorosulfonylimide in a form of white powder. According to ICP detection, Na is 0.4ppm, K is 0.3ppm, Ca is 0.1ppm, and others (Fe/Cu/Zn/Pb) are each less than 1.0ppm.

The water content in the non-aqueous solvent acetonitrile is 10ppm.

The water content in the poor solvent chlorobenzene is 35ppm.

The water content in the raw material pentalithium triphosphate is 82ppm.

### Embodiment 10

Embodiment 10 of the present invention provides a lithium bisfluorosulfonylimide salt, and the preparation raw materials are the bisfluorosulfonylimide high-purity product obtained in Purification Example 2, lithium citrate, and non-aqueous solvent ethyl acetate.

The method for preparing the lithium bisfluorosulfonylimide salt is performed as follows:
at room temperature, in a nitrogen atmosphere, 500g of non-aqueous solvent ethyl acetate and 1.0mol of lithium citrate are added into a 1000ml reaction bottle, and the temperature is lowered to 15°C to 20°C while stirring. 181g (1.0mol) of self-made bisfluorosulfonylimide is added dropwise for 2 hours. Then, stirring is performed at 15°C to 20°C for 6 hours, and the reaction solution is sampled and tested for the acid value to reach the end of the reaction.

The reaction solution is placed in a glove box and filtered. The filtrate is vacuum-concentrated at 30°C to 35°C into a thick, translucent solid-liquid mixture, and 800g of poor solvent dichloroethane is then added. The temperature is lowered to 0°C by a cold water bath, and a large amount of white solids are separated due to crystallization, transferred into the glove box for refiltration, and vacuum-dried at 40°C to 50°C for 6 hours to obtain 177.3g of lithium bisfluorosulfonylimide in a form of white powder. According to ICP detection, Na is 1.3ppm, K is 0.6ppm, Ca is 0.3ppm, and others (Fe/Cu/Zn/Pb) are each less than 1.0ppm.

The water content in the non-aqueous solvent ethyl acetate is 88ppm.

The water content in the poor solvent dichloroethane is 22ppm.

The water content in the raw material lithium citrate is 65ppm.

### Embodiment 11

Embodiment 11 of the present invention provides a lithium bisfluorosulfonylimide salt, and the preparation raw materials are the bisfluorosulfonylimide high-purity product obtained in Purification Example 2, bisphenol A dilithium, and a mixed solvent of non-aqueous solvent methyl ethyl carbonate and tetrachloroethane.

The method for preparing the lithium bisfluorosulfonylimide salt is performed as follows:
at room temperature, in a nitrogen atmosphere, 500g of a mixed solvent of non-aqueous solvent methyl ethyl carbonate and tetrachloroethane (a weight ratio of ethyl methyl carbonate and tetrachloroethane being 1: 3) and 240g (1.0mol) of bisphenol A dilithium are added into a 1000ml reaction bottle, and the temperature is lowered to 10°C to 20°C while stirring. 181g (1.0mol) of self-made bisfluorosulfonylimide is added dropwise for 4 hours. Then, stirring is performed at 20°C to 30°C for 6 hours, and the reaction solution is sampled and tested for the acid value to reach the end of the reaction.

The reaction solution is placed in a glove box and filtered to obtain a by-product. The filtrate is vacuum-concentrated at 30°C to 35°C into a thick, translucent solid-liquid mixture, and 800g of poor solvent tetrachloroethane is then added. The temperature is lowered to 0°C by a cold water bath, and a large amount of white solids are separated due to crystallization, transferred into the glove box for refiltration, and vacuum-dried at 40°C to 50°C for 6 hours to obtain 182.0g of lithium bisfluorosulfonylimide in a form of white powder. According to ICP detection, Na is 0.5ppm, K is 0.2ppm, Ca is 0.1ppm, and others (Fe/Cu/Zn/Pb) are each less than 1.0ppm.

The water content in the non-aqueous solvent methyl ethyl carbonate is 8ppm.

The water content in the poor solvent tetrachloroethane is 12ppm.

The water content in the raw material bisphenol A dilithium is 47ppm.

### Comparative Example 1

Comparative Example 1 of the present invention provides a lithium bisfluorosulfonylimide salt, and the preparation raw materials are the bisfluorosulfonylimide rectified product obtained in Preparation Example 2, lithium sulfate, and non-aqueous solvent acetonitrile.

The method for preparing the lithium bisfluorosulfonylimide salt is performed as follows:
at room temperature, in a nitrogen atmosphere, 300g of non-aqueous solvent acetonitrile and 220g (2.0mol) of anhydrous lithium sulfate are added into a 1000ml reaction bottle, and the temperature is lowered to 0°C to 10°C while stirring. 183g (1.0mol) of bisfluorosulfonylimide rectified product is added dropwise for 2 hours. Then, stirring is performed at 0°C to 10°C for 6 hours, and the reaction solution is sampled and tested for the acid value to reach the end of the reaction.

The reaction solution is placed in a glove box and filtered to obtain a mixture of by-products lithium sulfate and lithium hydrogen sulfate. The filtrate is vacuum-concentrated at 30°C to 35°C into a thick, translucent solid-liquid mixture, and 800g of poor solvent tetrachloroethane is then added. The temperature is lowered to 0°C by a cold water bath, and a large amount of white solids are separated due to crystallization, transferred into the glove box for refiltration, and vacuum-dried at 40°C to 50°C for 6 hours to obtain 179.2g of lithium bisfluorosulfonylimide in a form of white powder. According to ICP detection, Na is 1.3ppm, K is 0.4ppm, Ca is 0.1ppm, and others (Fe/Cu/Zn/Pb) are each less than 1.0ppm.

The water content in the non-aqueous solvent acetonitrile is 10ppm.

The water content in the poor solvent tetrachloroethane is 12ppm.

The water content in the raw material lithium sulfate is 17ppm.

### Comparative Example 2

Comparative Example 2 of the present invention provides a lithium bisfluorosulfonylimide salt, and the preparation raw materials are the bisfluorosulfonylimide high-purity product obtained in Purification Example 2, lithium sulfate and non-aqueous solvent acetonitrile with high water content.

The method for preparing the lithium bisfluorosulfonylimide salt is performed as follows:
at room temperature, in a nitrogen atmosphere, 300g of non-aqueous solvent acetonitrile and 220g (2.0mol) of anhydrous lithium sulfate are added into a 1000ml reaction bottle, and the temperature is lowered to 0°C to 10°C while stirring. 181g (1.0mol) of bisfluorosulfonylimide high-purity product is added dropwise for 2 hours. Then, stirring is performed at 0°C to 10°C for 6 hours, and the reaction solution is sampled and tested for the acid value to reach the end of the reaction.

The reaction solution is placed in a glove box and filtered to obtain a mixture of by-products lithium sulfate and lithium hydrogen sulfate. The filtrate is vacuum-concentrated at 30°C to 35°C into a thick, translucent solid-liquid mixture, and 800g of poor solvent tetrachloroethane is then added. The temperature is lowered to 0°C by a cold water bath, and a large amount of white solids are separated due to crystallization, transferred into the glove box for refiltration, and vacuum-dried at 40°C to 50°C for 6 hours to obtain 175.2g of lithium bisfluorosulfonylimide in a form of white powder. According to ICP detection, Na is 0.2ppm, K is 0.1ppm, Ca is 0.1ppm, and others (Fe/Cu/Zn/Pb) are each less than 1.0ppm.

The water content in the non-aqueous solvent acetonitrile is 450ppm.

The water content in the poor solvent tetrachloroethane is 220ppm.

The water content in the raw material lithium sulfate is 17ppm.

### Comparative Example 3

Comparative Example 3 of the present invention provides a lithium bisfluorosulfonylimide salt, and the preparation raw materials are bisfluorosulfonylimide, lithium dihydrogen phosphate, and non-aqueous solvent acetonitrile.

The method for preparing the lithium bisfluorosulfonylimide salt is performed as follows:
at room temperature, in a nitrogen atmosphere, 500g of non-aqueous solvent acetonitrile and 4.0mol of lithium dihydrogen phosphate are added into a 1000ml reaction bottle, and the temperature is lowered to 15°C to 20°C while stirring. 181g (1.0mol) of the bisfluorosulfonylimide high-purity product prepared in Purification Example 2 is added dropwise for 2 hours. Then, stirring is performed at 15°C to 20°C for 6 hours, and the reaction solution is sampled and tested for the acid value to reach the end of the reaction.

The reaction solution is placed in a glove box and filtered, 2000g of poor solvent dichloroethane is added, and the filtrate is vacuum-concentrated at 30°C to 35°C into a thick, translucent solid-liquid mixture. The temperature is lowered to 0°C by a cold water bath, and a large amount of white solids are separated due to crystallization, transferred into the glove box for refiltration, and vacuum-dried at 40°C to 50°C for 6 hours to obtain 166.4g of lithium bisfluorosulfonylimide in a form of white powder.

The water content in the solvent acetonitrile is 10ppm.

The water content in the solvent dichloroethane is 22ppm.

The water content in the raw material lithium dihydrogen phosphate is 49ppm.

### Comparative Example 4

Comparative Example 4 of the present invention provides a potassium bisfluorosulfonylimide salt, and the preparation raw materials are bisfluorosulfonylimide, potassium phosphate, and non-aqueous solvent ethyl acetate.

The method for preparing the potassium bisfluorosulfonylimide salt is performed as follows:
at room temperature, in a nitrogen atmosphere, 500g of non-aqueous solvent ethyl acetate and 212g (1.0mol) of potassium phosphate are added into a 1000ml reaction bottle, and the temperature is lowered to 10°C to 20°C while stirring. 181g (1.0mol) of the bisfluorosulfonylimide high-purity product prepared in Purification Example 2 is added dropwise for 2 hours. Then, stirring is performed at 20°C to 30°C for 6 hours, and the reaction solution is sampled and tested for the acid value to reach the end of the reaction.

The reaction solution is placed in a glove box and filtered to obtain a by-product, and 500g of poor solvent dichloromethane is added into the filtrate. The temperature is lowered to 0°C by a cold water bath, and a large amount of white solids are separated due to crystallization, transferred into the glove box for refiltration, and vacuum-dried at 50°C to 60°C for 8 hours to obtain 186.3g of potassium bisfluorosulfonylimide in a form of white powder.

The water content in the non-aqueous solvent ethyl acetate is 88ppm.

The water content in the poor solvent dichloromethane is 36ppm.

The water content in the raw material potassium phosphate is 80ppm.

### Performance Test

An ion chromatography is used to determine the purity of the bisfluorosulfonylimide salt; the yield (%) = the actual product weight/the theoretical product weight × 100%. The methods of detecting fluoride ions and chloride ions: an ion chromatograph is used for detection, wherein the unit is ppm; the method of detecting moisture: a Karl Fischer moisture titrator from METTLER TOLEDO Company is used for detection, wherein the unit is mass ppm; the method of detecting acid value: neutralization value method for petroleum products and lubricants according to National Standard GB/T 4954-2002 is used for determination; NMR test method: a NMR spectrometer is used for testing. The test results are shown in Table 1.

**Table 1**

| | yield (%) | purity (%) | chlorid e ions (ppm) | fbluorid e ions (ppm) | sulfate radicals (ppm) | wate r (ppm ) | ¹⁹F-NMR(pp m) | melting point (°C) |
|---|---|---|---|---|---|---|---|---|
| Embodiment 1 | 97.4 | 99.99 | 0.5 | 1.4 | 6.5 | 9 | 51.1 | 124°C~ 125°C |
| Embodiment 2 | 96.4 | 99.99 | 0.3 | 0.8 | 0.6 | 7 | 51.1 | 124°C~ 125°C |
| Embodiment 3 | 97.0 | 99.99 | 0.9 | 4.5 | 1.0 | 14 | 51.8 | 115°C~ 116°C |
| Embodiment 4 | 94.9 | 99.99 | 1.1 | 2.3 | 0.7 | 6 | 52.4 | 100°C~ 101°C |
| Embodiment 5 | 96.0 | 99.99 | 0.2 | 0.7 | 10 | 12 | 52.5 | 95°C~9 6°e |
| Embodiment 6 | 95.5 | 99.99 | 0.8 | 1.2 | 1.4 | 18 | 52.3 | 112°C~ 113°C |
| Embodiment 7 | 96.7 | 99.99 | 1.2 | 3.4 | 2.0 | 16 | 51.1 | 124°C~ 125°C |
| Embodiment 8 | 92.0 | 99.99 | 0.9 | 1.0 | 1.6 | 10 | 51.1 | 124°C~ 125°C |
| Embodiment 9 | 97.5 | 99.99 | 0.6 | 1.2 | 2.4 | 12 | 51.1 | 124°C~ 125°C |
| Embodiment 10 | 94.8 | 99.99 | 0.8 | 1.4 | 2.4 | 12 | 51.1 | 124°C~ 125°C |
| Embodiment 11 | 97.3 | 99.99 | 0.5 | 1.0 | 0.8 | 8 | 51.1 | 124°C~ 125°C |
| Comparison example 1 | 95.8 | 99.95 | 4.5 | 122 | 88 | 32 | 51.1 | 124°C~ 125°C |
| Comparison example 2 | 93.7 | 99.97 | 0.6 | 66 | 52 | 78 | 51.1 | 124°C~ 125°C |
| Comparison example 3 | 89.0 | 99.94 | 0.9 | 43 | 10 | 22 | 51.1 | 124°C~ 125°C |
| Comparison example 4 | 85.0 | 99.99 | 0.4 | 3.0 | 1.4 | 12 | 51.1 | 124°C~ 125°C |

"-" in Table 1 indicates that a corresponding performance test was not conducted for this embodiment.

The foregoing examples are merely illustrative and are used to explain some features of the method according to the present invention. The appended claims are intended to claim the widest possible scope that can be conceived, and the embodiments presented herein are merely illustrative of selected embodiments based on a combination of all possible embodiments. Accordingly, it is the applicant's intention that the appended claims not be limited by the selection of examples illustrating the features of the present invention. Some numerical ranges used in the claims also include subranges contained therein, and variations in these ranges should also be interpreted, where possible, as being covered by the appended claims.

## Claims

1. A method for preparing a high-purity bisfluorosulfonylimide salt, wherein the preparation raw materials comprise at least bisfluorosulfonylimide as HFSI, and M⁺ₙXⁿ⁻,
wherein the method comprises the following steps: mixing bisfluorosulfonylimide and M⁺ₙXⁿ⁻ in a non-aqueous solvent, incurring a reaction, and carrying out a post-treatment to obtain the finished product. wherein M is selected from any one of Li, Na, K, Rb and Cs and X is an anion comprising at least one element of B, O, N, P and Si, and n≥2,
wherein the M⁺ₙXⁿ⁻ is a polybasic inorganic salt, comprising at least one of sulfate, sulfite, thiosulfate, phosphate, monohydrogen phosphate, phosphite, pyrophosphate, silicate, hexafluorosilicate, borate, molybdate, and chromate
or
wherein the M⁺ₙXⁿ⁻ is a polybasic carboxylate, comprising at least one of oxalate, malonate, succinate, glutarate, adipate, sebacate, maleate, fumarate, tartaric acid disalt, glutamic acid disalt, cyclohexane tricarboxylate, phthalate, isophthalate, terephthalate, 1,3,5-benzenetricarboxylate, citrate, ethylenediaminetetraacetic acid tetrasalt, ethylenediaminetetraacetic acid trisalt, and ethylenediaminetetraacetic acid disalt
or
wherein the M⁺ₙXⁿ⁻ is a polybasic organic phenate, comprising at least one of catechol disalt, resorcinol disalt, hydroquinone disalt, diphenol disalt, bisphenol A disalt, salicylic acid disalt, p-hydroxybenzenesulfonic acid disalt, o-hydroxybenzenesulfonic acid disalt, and 5-sulfo-1,3-phthalic acid disalt
and
wherein the non-aqueous solvent comprises one of or a combination of more than one of: acetonitrile, propionitrile, butyronitrile, isobutyronitrile, malononitrile, cyclohexanonitrile, acrylonitrile, tetrahydrofuran, 2-methyltetrahydrofuran, 1,3-dioxolane, 1,4-dioxane, acetone, butanone, methyl isobutyl ketone, cyclopentanone, cyclohexanone, nitromethane, N, N-dimethylformamide, N, N-dimethylacetamide, methyl formate, methyl acetate, ethyl acetate, butyl acetate, isopropyl acetate, γ-butyrolactone, ethyl trifluoroacetate, methyl trifluoroacetate, dimethyl carbonate, diethyl carbonate, ethylene carbonate, propylene carbonate, ethyl methyl carbonate, ethyl ether, propyl ether, ethyl propyl ether, isopropyl ether, tert-butyl methyl ether, ethylene glycol dimethyl ether, ethylene glycol methyl ethyl ether, ethylene glycol diethyl ether, diethylene glycol dimethyl ether, triethylene glycol dimethyl ether, tetraethylene glycol dimethyl ether, N-methyl-2-pyrrolidone, pentane, hexane, heptane, octane, iso-octane, decane, dodecane, benzene, methylbenzene, dimethylbenzene, ethylbenzene, propylbenzene, trimethylbenzene, tetrahydronaphthalene, dichloromethane, dichloroethane, chloroform, trichloroethane, tetrachloroethane, tetrachloroethylene, trifluorotrichloroethane, chlorobutane, chlorocyclohexane, chlorobenzene, trichlorobenzene, fluorobenzene, and trifluoromethylbenzene;
wherein the water content in the non-aqueous solvent is less than 100 mass ppm;
and
wherein the post-treatment process comprises filtering, vacuum concentration, and recrystallization in a poor solvent and
wherein a purity of the obtained bisfluorosulfonylimide is greater than 99.9%, and
wherein a molar ratio of the bisfluorosulfonylimide to M⁺ₙXⁿ⁻ is 1 : (0.5~4). and wherein the water content is measured as described in the specification.

2. The method for preparing a bisfluorosulfonylimide salt according to claim 1, wherein the M⁺ₙXⁿ⁻ is selected from at least one of lithium sulfate, sodium phosphate, dipotassium malonate, rubidium sulfate, dicesium isophthalate, dilithium chromate dihydrate, lithium metasilicate, 3-hydroxy-2-oxopropyl phosphate dilithium, lithium tetraborate, lithium silicate, glyceryl phosphate dilithium, lithium orthosilicate, lithium sulfite, lithium molybdate, tetralithium diphosphate, lithium chromate, pentalithium triphosphate, dilithium phthalate, dilithium thiosulfate, dilithium hexafluorosilicate, dilithium adipate, dilithium sebacate, methylene bis(phosphonic acid) diethyl dilithium salt, 2-butenedioic acid dilithium salt, lithium oxalate, dilithium diphosphate, lithium maleate, dilithium azelate, lithium dichromate, lithium tartrate, lithium citrate, disodium malonate, disodium 2-hydroxyglutarate, disodium phenolphthalein monophosphate, disodium octaborate, dipotassium silicate, dipotassium sulfate, dipotassium peroxymonosulfate, rubidium chromate, bisphenol A dilithium, and bisphenol AF dilithium.

3. The method for preparing a bisfluorosulfonylimide salt according to any one of claims 1 to 2, wherein a water content in the M⁺ₙXⁿ⁻ is lower than 500 mass ppm, preferably lower than 100 mass ppm, and wherein the water content is measured as described in the specification.

4. The method for preparing a bisfluorosulfonylimide salt according to claim 1, wherein the temperature of the reaction is -20°C to 120°C, and the time of the reaction is 0.1h to 48h.

5. The method for preparing a bisfluorosulfonylimide salt according to claim 4, wherein the purity of the bisfluorosulfonylimide is improved by crystallization; the crystallization takes place in an organic solvent, and the organic solvent comprises at least one of alkanes, olefins, aromatic hydrocarbons, and chlorinated hydrocarbons.

6. The method for preparing a bisfluorosulfonylimide salt according to claim 5, wherein a crystallization temperature of the bisfluorosulfonylimide is -50°C to 100°C, preferably -20°C to 17°C.

## Patentansprüche

1. Verfahren zum Herstellen eines hochreinen Bisfluorsulfonylimidsalzes, wobei die Herstellungsrohmaterialien mindestens Bisfluorsulfonylimid als HFSI und M⁺ₙXⁿ⁻ umfassen, wobei das Verfahren die folgenden Schritte umfasst: Mischen von Bisfluorsulfonylimid und M⁺ₙXⁿ⁻ in einem nicht-wässrigen Lösungsmittel, Eingehen einer Reaktion und Durchführen einer Nachbehandlung, um das fertige Produkt zu erhalten, wobei M aus einem beliebigen von Li, Na, K, Rb und Cs ausgewählt ist und X ein Anion ist, das mindestens ein Element von B, O, N, P und Si umfasst, und n≥2, wobei das M⁺ₙXⁿ⁻ ein mehrwertiges anorganisches Salz ist, das mindestens eines von Sulfat, Sulfit, Thiosulfat, Phosphat, Monohydrogenphosphat, Phosphit, Pyrophosphat, Silikat, Hexafluorsilikat, Borat, Molybdat und Chromat umfasst, oder wobei das M⁺ₙXⁿ⁻ ein mehrwertiges Carboxylat ist, das mindestens eines von Oxalat, Malonat, Succinat, Glutarat, Adipat, Sebacat, Maleat, Fumarat, Weinsäuredisalz, Glutaminsäuredisalz, Cyclohexantricarboxylat, Phthalat, Isophthalat, Terephthalat, 1,3,5-Benzoltricarboxylat, Citrat, Ethylendiamintetraessigsäuretetrasalt, Ethylendiamintetraessigsäuretrisalt und Ethylendiamintetraessigsäuredisalz umfasst, oder wobei das M⁺ₙXⁿ⁻ ein mehrwertiges organisches Phenat ist, das mindestens eines von Catecholdisalz, Resorcinoldisalz, Hydrochinondisalz, Diphenoldisalz, Bisphenol A-Disalz, Salicylsäuredisalz, p-Hydroxybenzolsulfonsäuredisalz, o-Hydroxybenzolsulfonsäuredisalz und 5-Sulfo-1,3-phthalsäuredisalz umfasst, und wobei das nicht-wässrige Lösungsmittel eines von oder eine Kombination von mehr als einem von: Azetonitril, Propionitril, Butyronitril, Isobutyronitril, Malononitril, Cyclohexanonitril, Acrylnitril, Tetrahydrofuran, 2-Methyltetrahydrofuran, 1,3-Dioxolan, 1,4-Dioxan, Azeton, Butanon, Methylisobutylketon, Cyclopentanon, Cyclohexanon, Nitromethan, N,N-Dimethylformamid, N,N-Dimethylacetamid, Methylformiat, Methylazetat, Ethylacetat, Butylazetat, Isopropylazetat, γ-Butyrolacton, Ethyltrifluorazetat, Methyltrifluorazetat, Dimethylkarbonat, Diethylkarbonat, Ethylenkarbonat, Propylenkarbonat, Ethylmethylkarbonat, Ethylether, Propylether, Ethylpropylether, Isopropylether, tert-Butylmethylether, Ethylenglykoldimethylether, Ethylenglykolmethylethylether, Ethylenglykoldiethylether, Diethylenglykoldimethylether, Triethylenglykoldimethylether, Tetraethylenglykoldimethylether, N-Methyl-2-pyrrolidon, Pentan, Hexan, Heptan, Octan, Isooctan, Decan, Dodecan, Benzol, Methylbenzol, Dimethylbenzol, Ethylbenzol, Propylbenzol, Trimethylbenzol, Tetrahydronaphthalin, Dichlormethan, Dichlorethan, Chloroform, Trichlorethan, Tetrachlorethan, Tetrachlorethylen, Trifluortrichlorethan, Chlorbutan, Chlorcyclohexan, Chlorbenzol, Trichlorbenzol, Fluorbenzol und Trifluormethylbenzol umfasst; wobei der Wassergehalt in dem nicht-wässrigen Lösungsmittel weniger als 100 Massen-ppm beträgt; und wobei der Nachbehandlungsprozess Filtrieren, Vakuumkonzentration und Rekristallisation in einem schlechten Lösungsmittel umfasst, und wobei eine Reinheit des erhaltenen Bisfluorsulfonylimids größer als 99,9% ist, und wobei ein Molverhältnis des Bisfluorsulfonylimids zu M⁺ₙXⁿ⁻ 1 : (0,5 - 4) beträgt, und wobei der Wassergehalt wie in der Beschreibung beschrieben gemessen wird.

2. Verfahren zum Herstellen eines Bisfluorsulfonylimidsalzes nach Anspruch 1, wobei das M⁺ₙXⁿ⁻ aus mindestens einem von Lithiumsulfat, Natriumphosphat, Dikaliummalonat, Rubidiumsulfat, Dicesiumisophthalat, Dilithiumchromatdihydrat, Lithiummetasilikat, 3-Hydroxy-2-oxopropylphosphatdilithium, Lithiumtetraborat, Lithiumsilikat, Glycerylphosphatdilithium, Lithiumorthosilikat, Lithiumsulfit, Lithiummolybdat, Tetralithiumdiphosphat, Lithiumchromat, Pentalithiumtriphosphat, Dilithiumphthalat, Dilithiumthiosulfat, Dilithiumhexafluorsilikat, Dilithiumadipat, Dilithiumsebacat, Methylenbis(phosphonsäure)diethyldilithiumsalz, 2-Butendisäuredilithiumsalz, Lithiumoxalat, Dilithiumdiphosphat, Lithiummaleat, Dilithiumazelat, Lithiumdichromat, Lithiumtartrat, Lithiumcitrat, Dinatriummalonat, Dinatrium-2-hydroxyglutarat, Dinatriumphenolphthaleinmonophosphat, Dinatriumoctaborat, Dikaliumsilikat, Dikaliumsulfat, Dikaliumperoxymonosulfat, Rubidiumchromat, Bisphenol A-Dilithium und Bisphenol AF-Dilithium ausgewählt ist.

3. Verfahren zum Herstellen eines Bisfluorsulfonylimidsalzes nach einem der Ansprüche 1 bis 2, wobei ein Wassergehalt in dem M⁺ₙXⁿ⁻ weniger als 500 Massen-ppm, vorzugsweise weniger als 100 Massen-ppm beträgt und wobei der Wassergehalt wie in der Beschreibung beschrieben gemessen wird.

4. Verfahren zum Herstellen eines Bisfluorsulfonylimidsalzes nach Anspruch 1, wobei die Temperatur der Reaktion -20 °C bis 120 °C beträgt und die Zeit der Reaktion 0,1 h bis 48 h beträgt.

5. Verfahren zum Herstellen eines Bisfluorsulfonylimidsalzes nach Anspruch 4, wobei die Reinheit des Bisfluorsulfonylimids durch Kristallisation verbessert wird; die Kristallisation in einem organischen Lösungsmittel stattfindet und das organische Lösungsmittel mindestens eines von Alkanen, Olefinen, aromatischen Kohlenwasserstoffen und chlorierten Kohlenwasserstoffen umfasst.

6. Verfahren zum Herstellen eines Bisfluorsulfonylimidsalzes nach Anspruch 5, wobei eine Kristallisationstemperatur des Bisfluorsulfonylimids -50 °C bis 100 °C, vorzugsweise -20 °C bis 17 °C beträgt.

## Revendications

1. Procédé pour préparer un sel de bisfluorosulfonylimide de haute pureté, dans lequel les matières premières de préparation comprennent au moins du bisfluorosulfonylimide en tant que HFSI, et M⁺ₙXⁿ⁻, dans lequel le procédé comprend les étapes suivantes : mélanger du bisfluorosulfonylimide et M⁺ₙXⁿ⁻ dans un solvant non aqueux, effectuer une réaction, et exécuter un post-traitement pour obtenir le produit fini, dans lequel M est choisi parmi l'un quelconque de Li, Na, K, Rb et Cs et X est un anion comprenant au moins un élément de B, O, N, P et Si, et n ≥ 2, dans lequel M⁺ₙXⁿ⁻ est un sel inorganique polybasique, comprenant au moins l'un de sulfate, sulfite, thiosulfate, phosphate, monohydrogénophosphate, phosphite, pyrophosphate, silicate, hexafluorosilicate, borate, molybdate, et chromate ou dans lequel M⁺ₙXⁿ⁻ est un carboxylate polybasique, comprenant au moins l'un d'oxalate, malonate, succinate, glutarate, adipate, sébacate, maléate, fumarate, disel d'acide tartrique, disel d'acide glutamique, tricarboxylate de cyclohexane, phtalate, isophtalate, téréphtalate, 1,3,5-benzènetricarboxylate, citrate, tétrasel d'acide éthylènediaminetétraacétique, trisal d'acide éthylènediaminetétraacétique, et disel d'acide éthylènediaminetétraacétique ou dans lequel M⁺ₙXⁿ⁻ est un phénate organique polybasique, comprenant au moins l'un de disel de catéchol, disel de résorcinol, disel d'hydroquinone, disel de diphénol, disel de bisphénol A, disel d'acide salicylique, disel d'acide p-hydroxybenzènesulfonique, disel d'acide o-hydroxybenzènesulfonique, et disel d'acide 5-sulfo-1,3-phtalique et dans lequel le solvant non aqueux comprend l'un ou une combinaison de plus de l'un de : acétonitrile, propionitrile, butyronitrile, isobutyronitrile, malononitrile, cyclohexanonitrile, acrylonitrile, tétrahydrofurane, 2-méthyltétrahydrofurane, 1,3-dioxolane, 1,4-dioxane, acétone, butanone, méthylisobutylcétone, cyclopentanone, cyclohexanone, nitrométhane, N,N-diméthylformamide, N,N-diméthylacétamide, formiate de méthyle, acétate de méthyle, acétate d'éthyle, acétate de butyle, acétate d'isopropyle, γ-butyrolactone, trifluoroacétate d'éthyle, trifluoroacétate de méthyle, carbonate de diméthyle, carbonate de diéthyle, carbonate d'éthylène, carbonate de propylène, carbonate d'éthyle et de méthyle, éther éthylique, éther propylique, éther éthylpropylique, éther isopropylique, éther tert-butylméthylique, éther diméthylique d'éthylène glycol, éther méthylique d'éthylène glycol, éther diéthylique d'éthylène glycol, éther diméthylique de diéthylène glycol, éther diméthylique de triéthylène glycol, éther diméthylique de tétraéthylène glycol, N-méthyl-2-pyrrolidone, pentane, hexane, heptane, octane, iso-octane, décane, dodécane, benzène, méthylbenzène, diméthylbenzène, éthylbenzène, propylbenzène, triméthylbenzène, tétrahydronaphtalène, dichlorométhane, dichloroéthane, chloroforme, trichloroéthane, tétrachloroéthane, tétrachloroéthylène, trifluorotrichloroéthane, chlorobutane, chlorocyclohexane, chlorobenzène, trichlorobenzène, fluorobenzène, et trifluorométhylbenzène ; dans lequel la teneur en eau dans le solvant non aqueux est inférieure à 100 ppm en masse ; et dans lequel le procédé de post-traitement comprend filtrer, une concentration sous vide, et une recristallisation dans un solvant pauvre et dans lequel une pureté du bisfluorosulfonylimide obtenu est supérieure à 99,9 %, et dans lequel un rapport molaire du bisfluorosulfonylimide à M⁺ₙXⁿ⁻ is 1 : (0,5 ~ 4) et dans lequel la teneur en eau est mesurée comme décrit dans la description.

2. Procédé pour préparer un sel de bisfluorosulfonylimide selon la revendication 1, dans lequel le M⁺ₙXⁿ⁻ est choisi parmi au moins l'un parmi le sulfate de lithium, le phosphate de sodium, le malonate dipotassique, le sulfate de rubidium, l'isophtalate de diésium, le chromate dilithium dihydraté, le métasilicate de lithium, le 3-hydroxy-2-oxopropyl phosphate dilithium, le tétraborate de lithium, le silicate de lithium, le glycéryl phosphate dilithium, l'orthosilicate de lithium, le sulfite de lithium, le molybdate de lithium, le diphosphate de tétralithium, le chromate de lithium, le triphosphate de pentalithium, le phtalate de dilithium, le thiosulfate de dilithium, l'hexafluorosilicate de dilithium, l'adipate de dilithium, le sébacate de dilithium, le sel de diéthyldilithium de méthylène bis(acide phosphonique), le sel de dilithium d'acide 2-butènedioïque, l'oxalate de lithium, le diphosphate de dilithium, le maléate de lithium, l'azélate de dilithium, le dichromate de lithium, le tartrate de lithium, le citrate de lithium, le malonate disodique, le 2-hydroxyglutarate disodique, le monophosphate de phénolphtaléine disodique, l'octaborate disodique, le silicate dipotassique, le sulfate dipotassique, le peroxymonosulfate dipotassique, le chromate de rubidium, le dilithium de bisphénol A, et le dilithium de bisphénol AF.

3. Procédé pour préparer un sel de bisfluorosulfonylimide selon l'une quelconque des revendications 1 à 2, dans lequel une teneur en eau dans le M⁺ₙXⁿ⁻ est inférieure à 500 ppm en masse, de préférence inférieure à 100 ppm en masse, et dans lequel la teneur en eau est mesurée comme décrit dans la description.

4. Procédé pour préparer un sel de bisfluorosulfonylimide selon la revendication 1, dans lequel la température de la réaction est de -20 °C à 120 °C, et le temps de la réaction est de 0,1 h à 48 h.

5. Procédé pour préparer un sel de bisfluorosulfonylimide selon la revendication 4, dans lequel la pureté du bisfluorosulfonylimide est améliorée par cristallisation ; la cristallisation a lieu dans un solvant organique, et le solvant organique comprend au moins l'un parmi des alcanes, des oléfines, des hydrocarbures aromatiques, et des hydrocarbures chlorés.

6. Procédé pour préparer un sel de bisfluorosulfonylimide selon la revendication 5, dans lequel une température de cristallisation du bisfluorosulfonylimide est de -50 °C à 100 °C, de préférence de -20 °C à 17 °C.
